# EUROPEAN PATENT APPLICATION

(11) **EP 4 541 941 A1**
(43) Date of publication of application: **23.04.2025**
(21) Application number: 24204885.8
(22) Date of filing: 07.10.2024
(51) Int. Cl.: C25B 1/04, C25B 9/23, C25B 9/75, C25B 11/032

(54) **ELECTRODE STRUCTURE, GAS DIFFUSION LAYER, AND WATER ELECTROLYZER**

(30) Priority: 18.10.2023 JP 2023179478
(71) Applicant: SCREEN Holdings Co., Ltd., Kyoto-shi, Kyoto 602-8585 (JP)
(72) Inventor: ENOMOTO, Yuto, Kyoto 602-8585 (JP); KAWAKAMI, Takuto, Kyoto 602-8585 (JP)
(74) Representative: Goddar, Heinz J.

(57) **Abstract**

To provide a technique allowing reduction in the amount of usage of a catalyst material while alleviating performance degradation of a gas diffusion layer. A cell as an electrode structure comprises an electrolyte membrane (41), a gas diffusion layer (43), and a catalyst layer (45). The gas diffusion layer (43) is positioned on one side of the electrolyte membrane (41). The gas diffusion layer (43) is a porous layer. The catalyst layer (45) is positioned between the electrolyte membrane (41) and the gas diffusion layer (43). The catalyst layer (45) is formed from a catalyst material. A penetration part (433) formed in the gas diffusion layer (43) by the penetration the catalyst material having a thickness of 1 µm or less.

## Description

### BACKGROUND OF THE INVENTION

### Field of the Invention

A subject matter disclosed in this specification relates to an electrode structure, a gas diffusion layer, and a water electrolyzer.

### Description of the Background Art

A membrane-electrode-assembly (MEA) is used in the fields of fuel cells, water electrolyzers and others. The MEA has high catalyst activity, encourages reaction in a fuel cell or an electrolytic hydrogen generating cell, and realizes high efficiency of electricity generation. Furthermore, as the MEA generates no CO₂ during energy conversion, using the MEA achieves reduction in environmental load.

The MEA generally has an electrode structure with a catalyst layer and a gas diffusion layer (GDL) stacked sequentially on each of both sides of a polymer electrolyte membrane (PEM). Such an electrode structure is disclosed in Japanese Patent No. 5292729, for example. Japanese Patent No. 5292729 discloses a technique of preventing a paste composition for forming a flat layer from penetrating during application of the paste composition on a surface of a conductive porous base material of a gas diffusion layer.

### SUMMARY OF THE INVENTION

### Technical Problem

The MEA is manufactured by a method using a known process of providing catalyst layers on an electrolyte membrane and interposing the catalyst layers and the electrolyte membrane using gas diffusion layers in a pair, or using a known process of bonding gas diffusion layers in a pair each provided with a catalyst layer to an electrolyte membrane. The catalyst layer is formed by a method using a known process such as a die coating process, a spray coating process, or a decal process, for example. The spray coating process is a process of forming a coating film on a base material by spraying a liquid catalyst material. The decal process is a process of bonding a solid catalyst material in a film form or in a sheet form directly to a base material. It is generally difficult to improve productivity using these processes. On the other hand, the die coating process is a process of applying a liquid catalyst material directly to a base material from a die nozzle and is suitable for producing MEAs in large quantity.

However, the attachment of a liquid catalyst material to a gas diffusion layer might cause the catalyst material to penetrate into the gas diffusion layer. Increase in the catalyst material penetrating into the gas diffusion layer degrades the performance of the gas diffusion layer such as gas diffusion efficiency. It is also likely that the amount of usage of the catalyst material will be increased in order to ensure the thickness of a catalyst layer.

The present invention is intended to provide a technique allowing reduction in the amount of usage of a catalyst material while alleviating performance degradation of a gas diffusion layer.

### Solution to Problem

A first aspect is intended for an electrode structure. The electrode structure according to the first aspect comprises: an electrolyte membrane; a porous gas diffusion layer positioned on one side of the electrolyte membrane; and a catalyst layer formed from a catalyst material and positioned between the electrolyte membrane and the gas diffusion layer. A penetration part formed in the gas diffusion layer by the penetration of the catalyst material having a thickness of 1 µm or less.

A second aspect is intended for an electrode structure. The electrode structure according to the second aspect comprises: an electrolyte membrane; a porous gas diffusion layer positioned on one side of the electrolyte membrane; and a catalyst layer formed from a catalyst material and positioned between the electrolyte membrane and the gas diffusion layer. A penetration part present in the gas diffusion layer by the penetration of the catalyst material having a thickness of one-tenth or less of the thickness of the catalyst layer.

A third aspect is intended for an electrode structure according to the first aspect or the second aspect. In the electrode structure according to the third aspect, the gas diffusion layer includes an anti-penetration layer positioned on the catalyst layer. The anti-penetration layer prevents penetration of the catalyst material.

A fourth aspect is intended for a porous gas diffusion layer. The gas diffusion layer according to the fourth aspect comprises an anti-penetration layer provided on a side where a catalyst layer containing a catalyst material is positioned. The anti-penetration layer contains an anti-penetration agent for prevents the penetration of the catalyst material.

A fifth aspect is intended for a water electrolyzer for electrolysis of water. The water electrolyzer according to the fifth aspect comprises the electrode structure according to any one of the first to third aspects.

### Advantages Effects of Invention

In the electrode structures according to the first to third aspects, it is possible to reduce penetration of the catalyst material into the gas diffusion layer. This allows reduction in the amount of usage of the catalyst material while alleviating reduction in gas diffusion efficiency.

In the electrode structure according to the third aspect, the presence of the anti-penetration layer makes it possible to reduce penetration of the catalyst material into the gas diffusion layer.

In the gas diffusion layer according to the fourth aspect, the presence of the anti-penetration layer makes it possible to reduce penetration of the catalyst material into the gas diffusion layer.

In the water electrolyzer according to the fifth aspect, it is possible to reduce penetration of the catalyst material into the gas diffusion layer. This allows reduction in the amount of usage of the catalyst material while alleviating performance degradation of the gas diffusion layer.

These and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a schematic view showing a water electrolyzer 1 according to one preferred embodiment;
Fig. 2 is a perspective view schematically showing a cell of the water electrolyzer shown in Fig. 1;
Fig. 3 illustrates a section of a part of the cell in Fig. 2 in an enlarged manner;
Fig. 4 illustrates a first flow of manufacturing the cell shown in Fig. 2;
Fig. 5 illustrates a catalyst particle contained in a catalyst material used to form a catalyst layer; and
Fig. 6 illustrates a second flow of manufacturing the cell shown in Fig. 2.

### DESCRIPTION OF THE PREFERRED EMBODIMENTS

A preferred embodiment of the present invention will be described below with reference to the accompanying drawings. Constituting elements in the preferred embodiment are described merely as examples, and the scope of the present invention is not to be limited only to these elements. To facilitate understanding, the size of each part or the number of such parts in the drawings may be illustrated in an exaggerated manner or a simplified manner, as needed.

### <1. Preferred Embodiment>

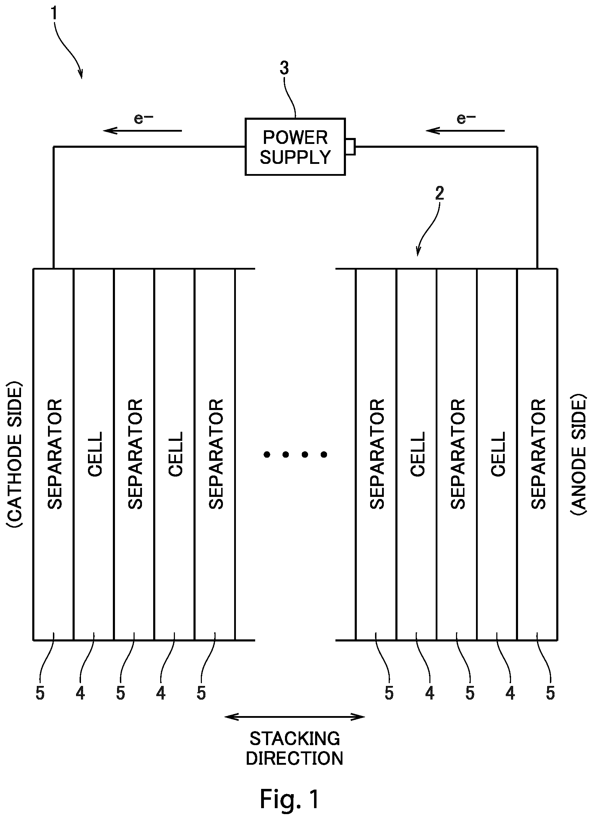

Fig. 1 is a schematic view showing a water electrolyzer 1 according to one preferred embodiment. The water electrolyzer 1 is a device that produces hydrogen through solid polymer water electrolysis. As shown in Fig. 1, the water electrolyzer 1 includes a cell stack 2 and a power supply 3.

The cell stack 2 includes a plurality of cells 4 and a plurality of separators 5. The cell stack 2 is constructed by alternately stacking the cells 4 and the separators 5. In the following description, a direction in which the cells 4 and the separators 5 are stacked will be called a "stacking direction." The power supply 3 applies a voltage to the cell stack 2.

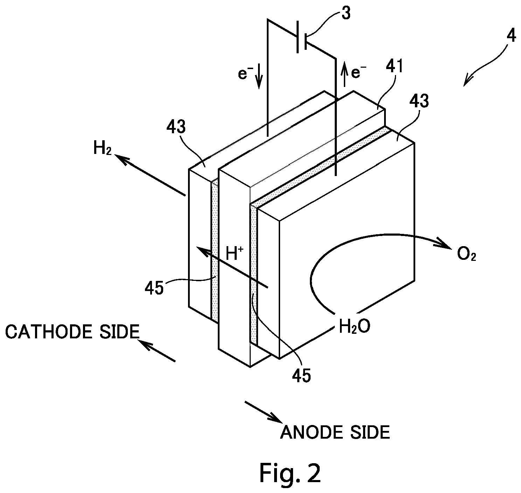

Fig. 2 is a perspective view schematically showing the cell 4 of the water electrolyzer 1 shown in Fig. 1. The cell 4 includes an electrolyte membrane 41, gas diffusion layers 43 in a pair, and catalyst layers 45 in a pair. A stacked body composed of the electrolyte membrane 41, the gas diffusion layers 43 in a pair, and the catalyst layers 45 in a pair is called a membrane-electrode-assembly (MEA). This membrane-electrode-assembly is an example of an "electrode structure."

The electrolyte membrane 41 is a ion-conductive membrane (ion-exchange membrane) and has insulating properties. A fluorine-based or hydrocarbon-based polymer electrolyte membrane can be used as the electrolyte membrane 41, for example. More specifically, a polymer electrolyte membrane containing perfluorocarbon sulfonic acid can be used as the electrolyte membrane 41.

The gas diffusion layers 43 are positioned one by one on both sides of the electrolyte membrane 41. The gas diffusion layer 43 is a member having electrical conductivity and is composed of a porous member. Carbon paper or carbon cloth can be used as the gas diffusion layer 43, for example.

The catalyst layer 45 is positioned between the electrolyte membrane 41 and the gas diffusion layer 43. The catalyst layer 45 is formed from a catalyst material. The catalyst material contains catalyst metal such as platinum (Pt), a platinum alloy, or a platinum compound, for example. The platinum alloy may be an alloy of at least one type of metal and platinum, and the at least one type of metal is selected from a group consisting of ruthenium (Ru), palladium (Pd), nickel (Ni), molybdenum (Mo), iridium (Ir), and iron (Fe), for example.

As shown in Figs. 1 and 2, when the power supply 3 of the water electrolyzer 1 applies a voltage between the gas diffusion layers 43 in a pair of the cell 4, oxygen gas (O₂) and hydrogen ions (H⁺) are generated from water (H₂O) at the catalyst layer 45 on an anode side. This reaction is represented by the following formula.

Anode:

2H₂O → 4H⁺ + Q₂ + 4e⁻

The oxygen gas generated on the anode side passes through the gas diffusion layer 43 on the anode side and is then output. The hydrogen ions generated on the anode side pass through the electrolyte membrane 41 and then move to a cathode side. At the catalyst layer 45 on the cathode side, the hydrogen ions (H⁺) that have migrated from the anode react with electrons (e⁻) to generate hydrogen gas (H₂). This reaction is represented by the following formula.

Cathode:

2H⁺ + 2e⁻ → H₂

The hydrogen gas generated on the cathode side passes through the gas diffusion layer 43 on the cathode side and is then output.

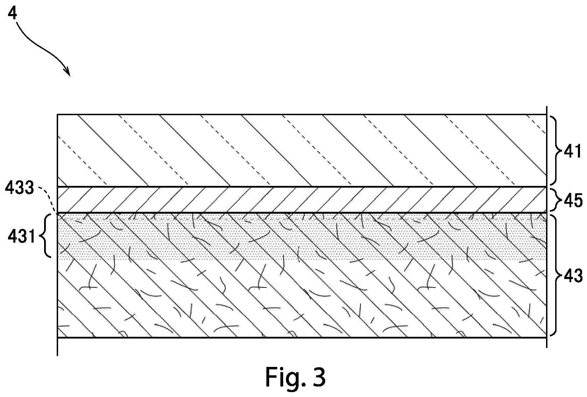

Fig. 3 is an enlarged sectional view showing a section of a part of the cell 4 shown in Fig. 2. As shown in Fig. 3, the gas diffusion layer 43 includes an anti-penetration layer 431. The anti-penetration layer 431 is designed to prevent the penetration of the catalyst material. The anti-penetration layer 431 is a surface layer of the gas diffusion layer 43 adjacent to the catalyst layer 45. The anti-penetration layer 431 is formed by performing an anti-penetration process on the gas diffusion layer 43, as will be described later. The provision of the anti-penetration layer 431 at the gas diffusion layer 43 is not an absolute necessity but the anti-penetration layer 431 is omissible.

The gas diffusion layer 43 includes a penetration part 433. The penetration part 433 is formed by the penetration of the catalyst material from in the catalyst layer 45 into the gas diffusion layer 43. The thickness of the penetration part 433 (the thickness thereof in the stacking direction) is for example equal to or less than 1 µm,. The thickness of the penetration part 433 is equal to or less than one-tenth of the thickness of the catalyst layer 45. By setting the thickness of the penetration part 433 equal to or less than 1 µm or by setting the thickness of the penetration part 433 equal to or less than one-tenth of the thickness of the catalyst layer 45, penetration of the catalyst material into the gas diffusion layer 43 is reduced. By doing so, it becomes possible to alleviate performance degradation of the gas diffusion layer 43 and to reduce the amount of usage of the catalyst material.

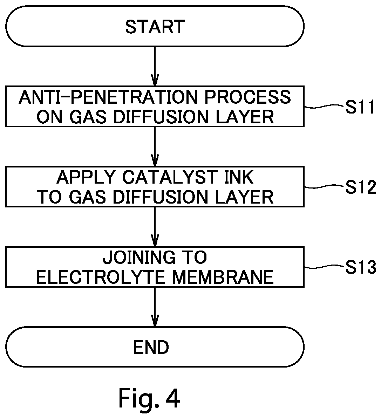

Fig. 4 illustrates a first flow of manufacturing for the cell 4 shown in Fig. 2. Initially, an anti-penetration process is applied to the surface of the gas diffusion layer 43 (step S11). The anti-penetration process involves applying an anti-penetration agent for preventing penetration of the catalyst material, for example. After step S11, the catalyst material ink (hereinafter referred to as "catalyst ink") is applied to the surface of the gas diffusion layer 43 having been subjected to the anti-penetration process (step S12). After step S12, a drying process is performed to evaporate a solvent in the catalyst ink, thereby forming the catalyst layer 45 on the surface of the gas diffusion layer 43. Then, the gas diffusion layer 43 on which the catalyst layer 45 is formed is joined to the gas diffusion layer 43 on each of the anode side and the cathode side (step S13). As a result, the cell 4, serving as an electrode structure, is formed.

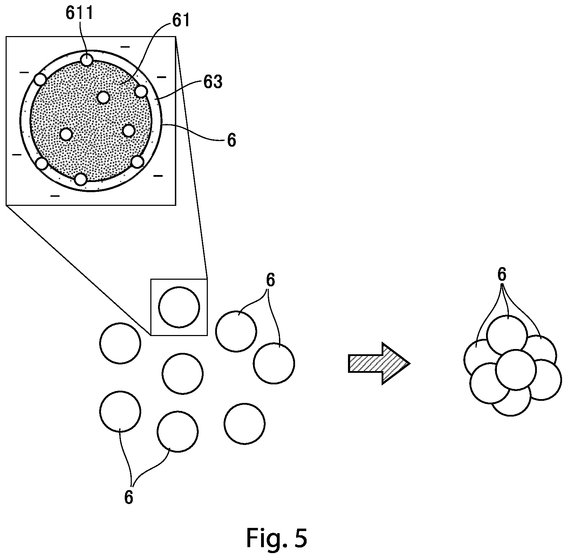

Fig. 5 illustrates a catalyst particle 6 contained in the catalyst material used to form the catalyst layer 45. The catalyst particle 6 includes a carbon support 61 and an ionomer 63. The carbon support 61 supports catalyst metal 611.

The ionomer 63 is an electrolyte polymer that covers the carbon support 61. The ionomer 63 functions to transport hydrogen ions, generated at the catalyst layer 45 on the anode side during the electrolysis of water. For example, nafion (perfluorocarbon sulfonic acid) can be used as the ionomer 63. The ionomer 63 has a polymer chain structure with an ion-exchange group such as a sulfone group. The hydrogen ions combine with water to form oxonium ions (H₃O⁺) and then propagate through the ion-exchange group of the ionomer 63. As shown in Fig. 5, the ionomer 63 is charged negatively. Thus, in step S12, the catalyst particles 6 in the catalyst material ink applied to the gas diffusion layer 43 are separated from each other.

As the anti-penetration agent to be applied to the gas diffusion layer 43 in step S11, a flocculant that flocculates the catalyst particles 6 in the catalyst ink, namely, a flocculant to cause solvent shock can be used. In this case, the anti-penetration layer 431 containing the flocculant is formed in the gas diffusion layer 43. For example, a cationic resin or a multivalent metal salt can be used as the flocculant. When the catalyst particles 6 are charged negatively, as described above, contact between the catalyst particles 6 with the cationic flocculant causes flocculation of the catalyst particles 6. Then, the flocculated catalyst particles 6 block tiny pores of the gas diffusion layer 43 to reduce penetration of the catalyst ink into the gas diffusion layer 43.

If the catalyst ink is acid, alkali metal salt can be used as the flocculant. Contact of the catalyst ink with the alkali metal salt causes flocculation of the catalyst particles 6. By doing so, tiny pores of the gas diffusion layer 43 are blocked to reduce penetration of the catalyst ink into the gas diffusion layer 43.

The anti-penetration agent is not limited to the flocculants. For example, the anti-penetration agent may be a water repellent. In this case, the anti-penetration layer 431 containing the water repellent is formed in the gas diffusion layer 43. Examples of a materials that can be used as the water repellent include silicone resin, fluorine resin, and polyurethane. By applying the water repellent, it becomes possible to provide the gas diffusion layer 43 can be made water repellency. This reduce penetration of the catalyst ink into the gas diffusion layer 43.

The anti-penetration process in step S11 may be a process of providing the gas diffusion layer 43 with water repellency, and more specifically, it may be a heating process. If the gas diffusion layer 43 is composed of carbon fiber, for example, a hydrophilic group (such as a hydroxyl group or a carboxyl group) on a surface of the carbon fiber is degraded by the heating, making the surface approximate to pure carbon. This process makes it possible to impart water repellency to the gas diffusion layer 43.

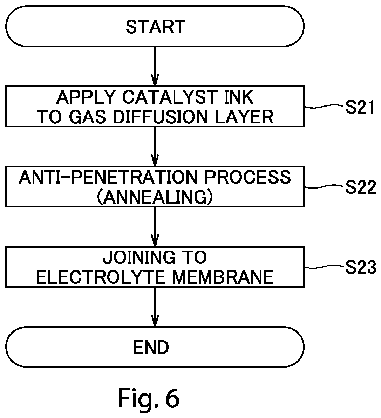

Fig. 6 is illustrates a second flow of manufacturing the cell 4 shown in Fig. 2. In this second manufacturing flow, the catalyst ink is first applied to a surface of the gas diffusion layer 43 (step S21). Then, immediately after application of the catalyst ink, the gas diffusion layer 43 undergoes an anti-penetration process (step S22). After step S22, a drying process is performed to evaporate a solvent in the catalyst ink, thereby forming the catalyst layer 45 on the surface of the gas diffusion layer 43. Then, the gas diffusion layer 43 on which the catalyst layer 45 is formed, is joined to the gas diffusion layer 43 on both the anode side and the cathode side (step S23). As a result, the cell 4 is formed.

The anti-penetration process in step S22 includes an annealing process, in which the catalyst ink applied to the gas diffusion layer 43 is heated. Heating the catalyst ink fixes it on the surface layer of the gas diffusion layer 43. This process reduces the penetration of the catalyst ink into the gas diffusion layer 43.

The catalyst ink may be applied multiple times. In such case, to reduce penetration of the catalyst ink into the gas diffusion layer 43, only a small amount of ink should be applied initially. By drying the initially applied catalyst ink , the penetration of the catalyst ink to be applied second and subsequent times is reduced. Water repellency can be provided by incorporating a water repellent, for example, into the initially applied catalyst ink. This process imparts water repellency to the surface of the gas diffusion layer 43, further reducing penetration of the catalyst ink applied in the second and subsequent times.

### <2. Modifications>

While the preferred embodiment of the present invention has been described above, the present invention is not limited to the above-described embodiment but can be modified in various ways.

For example, in the above-described preferred embodiment, the anti-penetration layer 431 is formed only on the surface layer of the gas diffusion layer 43. In another case, the anti-penetration layer 431 may be formed over the entire area of the gas diffusion layer 43. The anti-penetration layer 431 can be formed over the entire area of the gas diffusion layer 43 by impregnating the gas diffusion layer 43 with an anti-penetration agent and then drying the anti-penetration agent, for example.

In the above-described preferred embodiment, the catalyst layer 45 is formed on the gas diffusion layer 43 by applying the catalyst ink to the gas diffusion layer 43. Alternatively, the catalyst layer 45 may be formed by applying the catalyst ink onto the electrolyte membrane 41. Then, the gas diffusion layer 43 may be stacked on the catalyst layer 45 formed in this way.

The water electrolyzer 1 is not limited to a device for producing hydrogen through electrolysis of water. For example, the water electrolyzer 1 may be a device for producing methylcyclohexane (MCH) by bonding hydrogen ions resulting from electrolysis of water to toluene. Furthermore, the electrode structure may be applied to a fuel cell device that generates electricity from hydrogen or MCH.

While the invention has been shown and described in detail, the foregoing description is merely illustrative and not restrictive. It is therefore understood that numerous modifications and variations can be made without departing from the scope of the invention.

## Claims

1. An electrode structure (4) comprising:
an electrolyte membrane (41);
a porous gas diffusion layer (43) positioned on one side of said electrolyte membrane (41); and
a catalyst layer (45) made of a catalyst material (6) and positioned between said electrolyte membrane (41) and said gas diffusion layer (43), wherein
a penetration part (433) formed in said gas diffusion layer (43) by the penetration of said catalyst material (6) having a thickness of 1 µm or less.

2. An electrode structure (4) comprising:
an electrolyte membrane (41);
a porous gas diffusion layer (43) positioned on one side of said electrolyte membrane (41); and
a catalyst layer (45) made of a catalyst material (6) and positioned between said electrolyte membrane (41) and said gas diffusion layer (43), wherein
a penetration part (433) present in said gas diffusion layer (43) and penetrated with said catalyst material (6) having a thickness of one-tenth or less of the thickness of said catalyst layer (45).

3. The electrode structure (4) according to claim 1 or 2, wherein
said gas diffusion layer (43) includes an anti-penetration layer (431) positioned on said catalyst layer (45), the anti-penetration layer prevents the penetration of said catalyst material (6).

4. A porous gas diffusion layer (43) comprising:
an anti-penetration layer (431) provided on a side where a catalyst layer (45) containing a catalyst material (6) is positioned, the anti-penetration layer containing an anti-penetration agent for prevents the penetration of the catalyst material (6).

5. A water electrolyzer (1) for electrolysis of water, comprising:
the electrode structure (4) according to any one of claims 1 to 3.
